# EUROPÄISCHE PATENTSCHRIFT

(11) **EP 2 287 603 B1**
(45) Veröffentlichungstag und Bekanntmachung des Hinweises auf die Patenterteilung: **04.05.2016**
(21) Anmeldenummer: 09168207.0
(22) Anmeldetag: 19.08.2009
(51) Int. Cl.: G01N 27/90, G01B 11/24, G01B 11/245

(54) **VORRICHTUNG UND VERFAHREN ZUR ZERSTÖRUNGS- UND BERÜHRUNGSFREIEN ERFASSUNG VON FEHLERN IN EINEM PRÜFLING**
DEVICE AND METHOD FOR NON-DESTRUCTIVE AND CONTACTLESS DETECTION OF DEFECTS IN A TESTPIECE
DISPOSITIF ET PROCEDE DE DETERMINATION NON DESTRUCTIVE ET SANS CONTACT DE DEFAUTS DANS UN ECHANTILLON

(43) Veröffentlichungstag der Anmeldung: 23.02.2011
(73) Patentinhaber: PRÜFTECHNIK Dieter Busch AG, 85737 Ismaning (DE)
(72) Erfinder: Hölzl, Roland, 81369 München (DE); Zimmermann, Bernd, 79241 Ihringen (DE)

(56) Entgegenhaltungen:
- EP-A- 0 440 931
- EP-A- 1 154 226
- EP-A- 1 747 848
- WO-A-03/102496
- DE-A1- 10 114 961
- DE-A1-102006 048 954
- GB-A- 2 014 317
- J. LEE ET AL: 'Precision Measurement of Cylinder Surface Profile on an Ultra-Precision Machine Tool' MEASUREMENT SCIENCE REVIEW Bd. 9, Nr. 2, 01 Januar 2009, Seiten 49 - 52, XP055117861 DOI: 10.2478/v10048-009-0008-4 ISSN: 1335-8871

## Beschreibung

Die vorliegende Erfindung betrifft eine Vorrichtung zerstörungs- und berührungsfreien Erfassung von Fehlern in einem Prüfling mittels Wirbelstrommessung oder magnetischer Streuflussmessung gemäß dem Oberbegriff von Anspruch 1. Ferner betrifft die Erfindung ein entsprechendes Verfahren.

Ein übliches Messverfahren zur zerstörungs- und berührungsfreien Erfassung von Fehlern in einem Prüfling, insbesondere metallischem Halbzeug, ist das Induzieren und Messen von Wirbelströmen in dem Prüfling. Dabei wird der Prüfling mittels einer sinusförmig bestromten Sendespule mit periodischen elektromagnetischen Wechselfeldern beaufschlagt. Die dadurch in dem Prüfling induzierten Wirbelströme induzieren wiederum in einer als Sonde verwendeten Spulenanordnung ein periodisches elektrisches Signal, das eine Trägerschwingung entsprechend der Senderträgerfrequenz aufweist, deren Amplitude und/oder Phase durch einen Fehler in dem Prüfling in charakteristischer Weise moduliert wird, wenn ein Fehler in den empfindlichen Bereich der Sonde gelangt. Üblicherweise wird zum Abtasten des Prüflings der Prüfling linear bezüglich der Sonde bewegt, wobei jedoch auch Anordnungen mit rotierender Sonde bekannt sind. Ein Beispiel für eine Wirbelstrommessvoruchtung mit linear vorgeschobenem Prüfling ist in der US 5,175,498 zu finden.

Ein anderes übliches Messverfahren zur zerstörungs- und berührungsfreien Erfassung von Fehlern in einem Prüfling ist als Magnetstreuflussmessung (oder Magnetstreufeldmessung) bekannt, wobei mittels einer Induktionsspule mit magnetischem Joch eine Magnetisierung des Prüflings erzeugt wird und der dabei von dem Prüfling erzeugte magnetische Streufluss mittels eines geeigneten Sensors gemessen wird. Fehler im Prüfling werden anhand ihrer Auswirkungen auf den magnetischen Streufluss erfasst. Ein Beispiel für eine solche Streuflussmessung ist in der US 4,445,088 zu finden.

Um eine Wirbelstrom- bzw. Streuflussmessung durchführen zu können, muss der Prüfling dem Messgerät mittels einer geeigneten Führungseinrichtung in einer bezüglich des Messgeräts genau definierten, üblicherweise zentrierten, Position zugeführt werden, wobei diese definierte Zufuhr-Position im Betrieb dauerhaft beibehalten werden soll. Ein Beispiel für eine solche Positioniereinrichtung bzw. Führungseinrichtung ist in der DE 198 22 986 A1 zu finden.

Da sowohl bei der Wirbelstrommessung als auch bei der Streuflussmessung der Abstand zwischen Prüfling und Messsonde relativ kritisch ist, ist es für die Zuverlässigkeit bzw. Aussagekraft der Messungen wichtig, die genaue Zufuhr-Position des Prüflings sicherzustellen. Typischerweise wird die Führungseinrichtung für den Prüfling nicht regelmäßig überwacht. Dies kann vor allem aufgrund der rauen Umgebungen, in denen Wirbelstrom- bzw. Streuflussmessgeräte üblicherweise betrieben werden, z.B. in Stahlwerken, dazu führen, dass die Führungseinrichtung für den Prüfling schon nach relativ kurzer Laufzeit dejustiert ist, so dass die Zuverlässigkeit der Messungen problematisch sein kann. Insbesondere ist die Führungseinrichtung auch Alterungserscheinungen ausgesetzt, beispielsweise einem Verschleiß der Rollen. Bei einem dezentuerten zylindrischen Prüfling kann dies dazu führen, dass gleichartige Fehler je nach Position am Umfang des Prüfling unterschiedlich große Fehlersignale erzeugen.

Bei der Streuflussmessung, wo schleifende Sonden verwendet werden, führt eine Dezentrierung des Prüflings zu erhöhtem Verschleiß und erhöht die Gefahr, dass die Sondenköpfe kurzzeitig oder ganz abheben, was zu einer mehr oder weniger langen Unempfindlichkeit des Prüfsystems führt. Eine unterschiedliche Empfindlichkeit je nach Position des Fehlers am Umfang tritt auch bei der Streuflussmessung auf, da sich die Magnetjoche auf einem festen Orbit um den Prüfling bewegen, wodurch bei einer Dezentrierung auch die Magnetisierungsleistung mit der Position am Umfang moduliert ist und gleichartige Fehler je nach radialer Winkellage ungleich detektiert werden.

Bei Wirbelstrommessgeräten mit um den Umfang des Prüflings umlaufenden Sonden ist es bekannt, eine Abstandsmessung zwischen Sondenkopf und Prüfling vorzunehmen, um die Messung bezüglich eines im Verlauf eines Umlaufs schwankenden Abstand, z.B. aufgrund einer Dezentrierung oder einer Asymmetrie des Prüflingsquerschnitts, korrigieren zu können. Ein Beispiel für eine solche Anordnung ist in der DE 40 03 330 A1 zu finden.

Aus der DE 44 21 912 A1 ist eine Vorrichtung zum Zentrieren von Spindeln von Textilmaschinen bekannt, bei welcher zwei unter einem Winkel zueinander um die Spindel herum angeordnete Laser-Triangulationssensoren verwendet werden, um die Position der Spindel zu ermitteln.

In der DE 101 14 961 A1 ist ein Verfahren zur Bestimmung der Außenkontur und Orientierung von in Längsrichtung bewegten Wälzstahlprüflingen beschrieben, wobei in Umfangsrichtung des Prüflings verteilt mehrere Sensoren für Abschattungsmessungen angeordnet sind. Ein ähnliches Verfahren ist in der DE 10 2006 048 954 A1 beschrieben, wobei eine Abschattungsmessung mit einer Lichtschnittmessung kombiniert wird.

Aus der GB-2014317 ist eine Vorrichtung zur Untersuchung von Prüflingen bekannt, mit einer Messeinrichtung zum Durchführen einer Wirbelstrommessung und mit einem Abstandsensor zum berührungsfreien Erfassen des Abstandes zum Prüfling, wobei die Wirbelstromsensoren und der Abstandsensor sich um dem Prüfling drehen und beim Auslauf der Vorrichtung angeordnet sind.

Es ist Aufgabe der vorliegenden Erfindung, eine Vorrichtung und ein Verfahren zur zerstörungs- und berührungsfreien Erfassung von Fehlern in einem Prüfling mittels Wirbelstrom- oder magnetischer Streuflussmessung zu schaffen, wobei die Zuverlässigkeit der Messergebnisse erhöht werden soll. Ferner soll ein entsprechendes Verfahren geschaffen werden.

Diese Aufgabe wird erfindungsgemäß gelöst durch eine Vorrichtung gemäß Anspruch 1 bzw. ein Verfahren gemäß Anspruch 10.

Bei der erfindungsgemäßen Lösung ist vorteilhaft, dass dadurch, dass eine Überwachungseinheit mit mindestens drei in Umfangrichtung um den Prüfling herum verteilt angeordneten Abstandssensoren zum berührungslosen Erfassen des Abstands zwischen der dem jeweiligen Sensor zugewandten Oberfläche und dem jeweiligen Sensor sowie einer Einheit zum Auswerten der Sensorsignale vorgesehen ist, die Geometrie bzw. Position des Prüflings permanent bestimmt und überwacht werden kann, wodurch die Zuverlässigkeit der Wirbelstrommessung bzw. Streuflussmessung, deren Ergebnis stark vom Abstand zwischen Sonde und Prüflingsoberfläche abhängt, gesteigert werden kann. Ferner können die Signale der Abstandssensoren dazu verwendet werden, die Wirbelstrom- bzw. Streuflussmesseinrichtung zu steuern. So kann das Signal der Abstandssensoren die obligatorische Eingangslichtschranke für die Endensignalunterdrückung ersetzen.

Bei der Vorbereitung der Prüfung kann die Überwachungseinheit als Zentrierhilfe dienen. Dabei kann mit einem (geraden) Musterprüfling die Messeinrichtung horizontal und vertikal ausgerichtet werden. Die Überwachungseinheit liefert dann laufend die Abweichung vom Zentrum. Gibt es z.B. an den Einlaufrollen Abnutzungserscheinungen, dann können sie beim Einrichten mitberücksichtigt werden.

In der eigentlichen Prüfphase werden der Messeinrichtung Prüflinge zugeführt, die sich in der Querschnitts-Geometrie unterscheiden bzw. deren Querschnitts-Geometrie sich ändert (z.B. sich ändernde Durchmesser bei Rundmaterial oder Abweichungen von der Kreisgeometrie bei Rohren, aber auch Abweichungen in der Geradheit der Längsrichtung). Es kann in der Prüfphase die Querschnitts-Geometrie des Prüflings (d.h. Abmessung und Form des Querschnitts) geprüft werden, aber in der Kombination von Geometrie und Zentrum auch die axiale Abweichung der Geradheit des Prüflings. Es können also auch bei ideal ausgerichteter Prüfeinrichtung Abweichungen von Zentrum auftreten. Diese können erfasst werden und zusammen mit der Querschnitts-Geometrie qualitativ bewertet werden - z.B. laufender Durchmesser und axiale Durchbiegung des Prüflings. Die maximale axiale Durchbiegung in mm/m wird z.B. auch vertraglich vereinbart, weil zu hohe Abweichung eine zuverlässige Prüfung unmöglich machen, den Verschleiß erhöhen oder sogar die Messinrichtung zerstören können. Auch seinen Kunden wird der Hersteller von Rohren oder Stangen eine zulässige Grenze der Geradheit zusichern.

Darüber hinaus ist es möglich, das Prüfverfahren selbst zu validieren: nur eine vorgegebene Abweichung von Geometrie und Zentrum ist zulässig für ein gültige Prüfung, während bei Überschreitung der vorgegebenen Schranke diese Teile als ungeprüft protokolliert werden. Bei erheblichen Abweichungen könnte auch die Anlage angehalten werden, um größere Schäden der Messinrichtung zu vermeiden. Eine aufgezeichnete Verschlechterung der Geradheit des Prüfmaterials kann z.B. auch den Anwender dazu veranlassen, seine Richtmaschine einer Revision zu unterziehen.

Grundsätzlich ist auch eine laufende Ausrichtkorrektur der Messeinrichtung über einen Regelkreis denkbar. Dies wäre jedoch wegen der oft großen Masse der Messeinrichtung in der Praxis oft mit einem hohen Aufwand verbunden. Bei kleineren Messeinrichtungen können z.B. federnd aufgehängte Spulen verwendet werden, die dem Prüfling folgen, so dass hier eine Servolösung kombiniert mit der Zentrierhilfe realisiert werden kann.

Bevorzugte Ausgestaltungen der Erfindung ergeben sich aus den Unteransprüchen.

Im folgenden wird eine Ausführungsform der Erfindung anhand der beigefügten Zeichnungen beispielhaft erläutert. Dabei zeigen:
- Fig. 1: eine schematische Seitenansicht eines Beispiels einer erfindungsgemäßen Vorrichtung;
- Fig. 2: eine Ansicht der Vorrichtung von Fig. 1 in Richtung des Pfeils A; und
- Fig. 3: ein Blockschaltbild der Vorrichtung von Fig. 1.

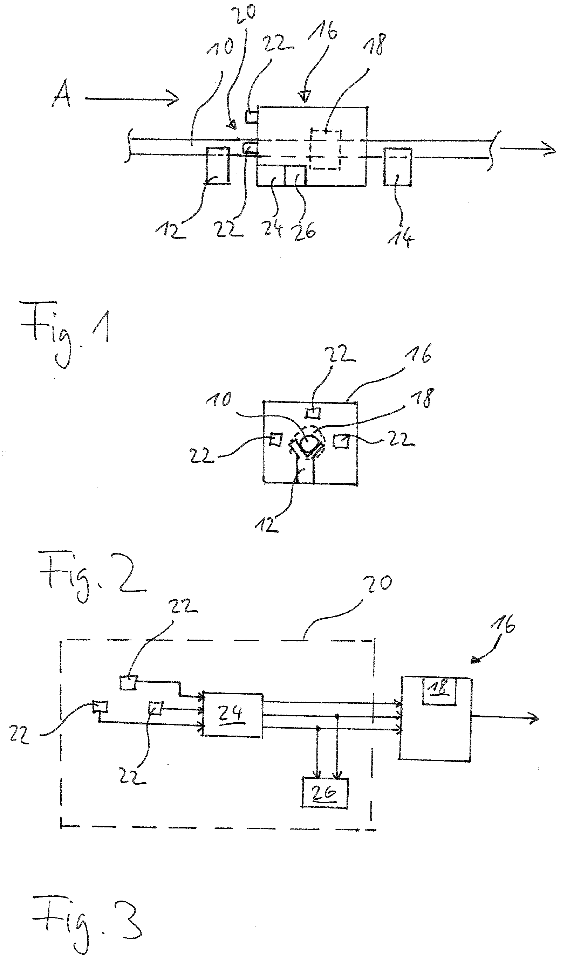

Fig. 1 ist eine schematische Seitenansicht eines Ausführungsbeispiels einer erfindungsgemäßen Vorrichtung zur zerstörungs- und berührungsfreien Erfassung von Fehlern in einem Prüfling. Der Prüfling 10 ist typischerweise ein industrielles Halbzeug und wird mittels einer einlassseitigen Positioniereinrichtung 12 und einer auslassseitigen Führungseinrichtung 14 bezüglich einer Messeinrichtung 16 vorgeschoben und, hauptsächlich mittels der einlassseitigen Positioniereinrichtung bezüglich der Messeinrichtung 16 in einer zur Bewegungsrichtung des Prüflings 10 senkrecht stehenden Ebene positioniert.

Bei der Messeinrichtung 16 kann es sich grundsätzlich um eine Wirbelstrommesseinrichtung oder um eine Einrichtung zum Messen eines magnetischen Streuflusses handeln. Die Messeinrichtung 16 weist einen am Prüfling 10 bzw. um den Prüfling 10 herum angeordneten stationären Messkopf 18 auf.

In den Fign. 1 und 2 ist ein Prüfling mit kreisförmigem Querschnitt dargestellt. Grundsätzlich kann die erfindungsgemäße Vorrichtung jedoch auch für Prüflinge mit anderen Querschnitten, z.B. rechteckigen Querschnitten, verwendet werden.

Am Einlauf der Messeinrichtung 16 ist eine Überwachungseinrichtung 20 vorgesehen, die mindestens drei berührungslose Abstandssensoren 22 aufweist, die in Umfangsrichtung verteilt um den Prüfling 10 herum angeordnet sind, um jeweils den Abstand zwischen der dem jeweiligen Sensor 22 zugewandten Oberfläche des Prüflings 10 und dem jeweiligen Sensor 22 zu erfassen.

Vorzugsweise sind die Sensoren 22 in Umfangsrichtung des Prüflings 10 so verteilt angeordnet, dass ein Sensor oben und die beiden anderen Sensoren seitlich unter einem Winkel von etwa 90° zu dem oberen Sensor liegen. Zwar wäre mathematisch ein Versatz der Sensoren von 120°, d.h. eine gleichmäßig verteilte Anordnung, zu bevorzugen. Allerdings können sich bei einer solchen gleichmäßigen Anordnung auf den unten liegenden optischen Distanzsensoren leicht Zunder und andere Verschmutzungen anlagern und den Laserstrahl bedämpfen. Je nach erforderlicher Genauigkeit der Messung können auch mehr als drei Sensoren 22 verwendet werden.

Ferner sind die Sensoren 22 vorzugsweise in einer gemeinsamen Ebene, nämlich einer Ebene senkrecht zur Vorschubrichtung des Prüflings 10, angeordnet.

Die Signale der Sensoren 22 werden einer Auswertungseinheit 24 zugeführt, die folgende Funktionen erfüllt: es wird aus dem Sensorsignalen die Position des Prüflings 10 relativ zu der Messeinrichtung 16 in einer zur Bewegungsrichtung des Prüflings 10 senkrecht stehenden Ebene ermittelt, d.h. es wird die Zentrierung des Prüflings 10 bezüglich der Messinrichtung 16 ermittelt. Bei der Vorbereitung der Prüfung kann die Überwachungseinrichtung 20 damit als Zentrierhilfe dienen, wobei unter Verwendung eines (geraden) Musterprüflings die Messeinrichtung 16 bzw. der Messkopf 18 horizontal und vertikal relativ zum Prüfling, d.h. relativ zur Positioniereinrichtung 12, anhand der ermittelten Abweichung von Zentrum ausgerichtet wird (dabei wird üblicherweise die Messeinrichtung 16 bzw. der Messkopf 18 relativ zum Prüfling 10, d.h. relativ zur Positioniereinrichtung 12, verstellt). In der eigentlichen Prüfphase können mittels der Überwachungseinrichtung 20 Abweichungen von Zentrum erfasst werden. Ferner wird aus den Sensorsignalen die Geometrie des Prüflings ermittelt (beispielsweise wird, sofern der Prüfling 10 zylindrisch ausgebildet ist, der Prüflingsdurchmesser ermittelt). In der Kombination von Geometrie und Zentrizität kann die Geradheit des Prüflings 10 ermittelt werden. Außerdem wird aus den Sensorsignalen ermittelt, ob überhaupt ein Prüfling vorhanden ist, um die Messeinrichtung 16 entsprechend zu steuern (hier kann insbesondere die Funktion der üblichen Eingangslichtschranke für die Endensignalunterdrückung realisiert werden).

Vorzugsweise ist eine optische Anzeigeeinrichtung 26 vorgesehen, um den ermittelten Durchmesser des Prüflings 10 und/oder die ermittelte Prüflingsposition anzuzeigen. Die Anzeigeeinrichtung 26 kann als LED-Anzeige für die Dezentrierung, beispielsweise in Form einer Zielscheibe, und den Durchmesser ausgebildet sein.

Die ermittelte Position des Prüflings 10 geht in die Bewertung der Wirbelstrommessung bzw. der Streuflussmessung ein und kann zu diesem Zweck der Messeinrichtung 16 zugeführt werden. Ferner kann die ermittelte Position des Prüflings 10 zu Protokollierungszwecken auch als Funktion der Zeit aufgezeichnet werden. Alternativ oder zusätzlich kann die ermittelte Position des Prüflings 10 verwendet werden, um die Position des Prüflings 10 mittels der Positioniereinrichtung 12 auf einen Sollwert hin zu korrigieren.

Auch der ermittelte Durchmesser und die ermittelte Geradheit des Prüflings 10 können bei der Bewertung der Wirbelstrommessung bzw. der Streuflussmessung verwendet werden und zu diesem Zweck der Messeinrichtung 16 zugeführt werden. Ferner können der ermittelte Durchmesser und die ermittelte Geradheit des Prüflings 10 als Funktion der Zeit aufgezeichnet werden, um eine Anzeige und Protokollierung der Prüflingseigenschaften zu ermöglichen. Insbesondere kann hier auch eine statistische Auswertung vorgenommen werden.

Ferner hat die Auswertungseinheit 24 einen "Lichtschrankenausgang" zur Steuerung der Messeinrichtung 16 je nachdem, ob gerade ein Prüfling 10 vorhanden ist oder nicht.

Die Überwachungseinheit 20 mit den Sensoren 22, der Auswertungseinheit 24 und der Anzeigeanrichtung 26 kann als separate Einheit ausgebildet sein oder sie kann in die Messeinrichtung 16 integriert sein. Auf jeden Fall muss die Position der Sensoren 22 bzgl. der Messeinrichtung 16 bzw. des Messkopfs 18 feststehend sein, um die Zentrierung des Prüflings 10 bzgl. des Messkopfs 18 ermitteln zu können.

## Patentansprüche

1. Vorrichtung zur zerstörungs- und berührungsfreien Erfassung von Fehlern in einem Prüfling, mit
einer stationären Messeinrichtung (16) zum Durchführen einer Wirbelstrommessung oder einer magnetischen Streuflussmessung an einem relativ zu der Messeinrichtung kontinuierlich vorgeschobenen Prüfling (10);
einer Einrichtung (12) zum Positionieren des Prüflings bezüglich der Messeinrichtung in einer zur Bewegungsrichtung des Prüflings senkrecht stehenden Ebene, und
einer Überwachungseinheit (20) mit mindestens drei in Umfangsrichtung um Prüfling (10) herum verteilt angeordneten Abstandssensoren (22) zum berührungslosen Erfassen des Abstands zwischen der dem jeweiligen Sensor zugewandten Oberfläche des Prüflings und dem jeweiligen Sensor sowie einer Einheit (24) zum Auswerten der Sensorsignale,
wobei die Auswertungseinheit (24) ausgebildet ist, um aus den Sensorsignalen die Position des Prüflings (10) relativ zu der Messeinrichtung (16) in einer zur Bewegungsrichtung des Prüflings senkrecht stehenden Ebene zu ermitteln, und wobei
die Auswertungseinheit (24) ausgebildet ist, um aus den Sensorsignalen den Querschnitt des Prüflings (10), sofern dieser zylindrisch ausgebildet ist, und/oder die Geradheit des Prüflings zu ermitteln,
**dadurch gekennzeichnet, dass**
die Abstandssensoren (22) kapazitiv, induktiv oder mit Ultraschall arbeiten, dass eine Position der Abstandssensoren (22) bezüglich der Messeinrichtung (16) feststehend ist und dass die Überwachungseinheit (20) an einem Einlauf der Messeinrichtung (16) vorgesehen ist, wobei die Einrichtung (12) einlassseitig angeordnet ist und auslassseitig eine Führungseinrichtung (14) zum Vorschieben des Prüflings (10) bezüglich der Messeinrichtung (16) angeordnet ist.

2. Vorrichtung gemäß Anspruch 1, **dadurch gekennzeichnet, dass** die Auswertungseinheit (24) ausgebildet ist, um zwecks Steuerung der Messeinrichtung (16) aus den Sensorsignalen zu ermitteln, ob ein Prüfling (10) vorhanden ist.

3. Vorrichtung gemäß einem der vorhergehenden Ansprüche, **dadurch gekennzeichnet, dass** die Abstandssensoren (22) in einer Ebene angeordnet sind.

4. Vorrichtung gemäß einem der vorhergehenden Ansprüche, **dadurch gekennzeichnet, dass** eine optische Anzeigeeinrichtung (26) vorgesehen ist, um den ermittelten Durchmesser und/oder die ermittelte Prüflingsposition anzuzeigen.

5. Verfahren zur zerstörungs- und berührungsfreien Erfassung von Fehlern in einem Prüfling (10), wobei
der Prüfling relativ zu einer Messeinrichtung (16) kontinuierlich vorgeschoben wird und bezüglich der Messeinrichtung in einer zur Bewegungsrichtung des Prüflings senkrecht stehenden Ebene positioniert wird;
mittels der Messeinrichtung eine Wirbelstrommessung oder eine magnetische Streuflussmessung an dem relativ zu der Messeinrichtung kontinuierlich vorgeschobenen Prüfling vorgenommen wird;
mittels mindestens dreier in Umfangsrichtung um Prüfling herum verteilt angeordneten Abstandssensoren (22) einer Überwachungseinheit (20) der Abstand zwischen der dem jeweiligen Sensor zugewandten Oberfläche des Prüflings und dem jeweiligen Sensor berührungslos erfasst und ausgewertet wird, wobei eine Position der Abstandssensoren (22) bezüglich der Messeinrichtung (16) feststehend ist und die Überwachungseinheit (20) an einem Einlauf der Messeinrichtung (16) vorgesehen ist,
aus den Sensorsignalen die Position des Prüflings (10) relativ zu der Messeinrichtung (16) in einer zur Bewegungsrichtung des Prüflings senkrecht stehenden Ebene ermittelt wird, und
aus den Sensorsignalen der Querschnitt des Prüflings (10), sofern dieser zylindrisch ausgebildet ist, und/oder die Geradheit des Prüflings ermittelt wird.

6. Verfahren gemäß Anspruch 5 **dadurch gekennzeichnet, dass** die ermittelte Position des Prüflings (10) in die Bewertung der Wirbelstrommessung bzw. der Streuflussmessung eingeht.

7. Verfahren gemäß Anspruch 5 oder 6 **dadurch gekennzeichnet, dass** die ermittelte Position des Prüflings (10) verwendet wird, um die Position der Messeinrichtung (16) relativ zum Prüfling (10) auf einen Sollwert hin zu korrigieren.

8. Verfahren gemäß einem der Ansprüche 5 bis 7 **dadurch gekennzeichnet, dass** der ermittelte Querschnitt und/oder die ermittelte Geradheit des Prüflings (10) als Funktion der Zeit aufgezeichnet wird.

9. Verfahren gemäß einem der Ansprüche 5 bis 8 **dadurch gekennzeichnet, dass** aus den Sensorsignalen ermittelt wird, ob ein Prüfling (10) vorhanden ist, und die Messeinrichtung (16) entsprechend gesteuert wird.

## Claims

1. Apparatus for the non-destructive and contactless detection of defects in a test piece, having
a stationary measuring device (16) for carrying out an eddy current measurement or a magnetic leakage flux measurement on a test piece (10) which is continuously advanced relative to the measuring device;
a device (12) for positioning the test piece with respect to the measuring device in a plane which is perpendicular to the direction of movement of the test piece, and
a monitoring unit (20) having at least three distance sensors (22) which are arranged in a manner distributed around the test piece (10) in the circumferential direction and are intended to contactlessly detect the distance between that surface of the test piece which faces the respective sensor and the respective sensor, and a unit (24) for evaluating the sensor signals,
the evaluation unit (24) being designed to use the sensor signals to determine the position of the test piece (10) relative to the measuring device (16) in a plane perpendicular to the direction of movement of the test piece, and
the evaluation unit (24) being designed to use the sensor signals to determine the cross section of the test piece (10), if the latter is cylindrical, and/or the straightness of the test piece,
**characterized in that**
the distance sensors (22) operate capacitively, inductively or with ultrasound, **in that** a position of the distance sensors (22) with respect to the measuring device (16) is stationary, and **in that** the monitoring unit (20) is provided at an inflow of the measuring device (16), the device (12) being arranged on the inlet side and a guide device (14) for advancing the test piece (10) with respect to the measuring device (16) being arranged on the outlet side.

2. Apparatus according to Claim 1, **characterized in that** the evaluation unit (24) is designed to use the sensor signals to determine whether there is a test piece (10) for the purpose of controlling the measuring device (16).

3. Apparatus according to one of the preceding claims, **characterized in that** the distance sensors (22) are arranged in a plane.

4. Apparatus according to one of the preceding claims, **characterized in that** an optical display device (26) is provided in order to display the determined diameter and/or the determined test piece position.

5. Method for the non-destructive and contactless detection of defects in a test piece (10),
the test piece being continuously advanced relative to a measuring device (16) and being positioned with respect to the measuring device in a plane which is perpendicular to the direction of movement of the test piece;
the measuring device being used to carry out an eddy current measurement or a magnetic leakage flux measurement on the test piece which is continuously advanced relative to the measuring device;
at least three distance sensors (22) of a monitoring unit (20) which are arranged in a manner distributed around the test piece in the circumferential direction being used to contactlessly detect and evaluate the distance between that surface of the test piece which faces the respective sensor and the respective sensor, a position of the distance sensors (22) with respect to the measuring device (16) being stationary and the monitoring unit (20) being provided at an inflow of the measuring device (16),
the sensor signals being used to determine the position of the test piece (10) relative to the measuring device (16) in a plane perpendicular to the direction of movement of the test piece, and
the sensor signals being used to determine the cross section of the test piece (10), if the latter is cylindrical, and/or the straightness of the test piece.

6. Method according to Claim 5, **characterized in that** the determined position of the test piece (10) is included in the assessment of the eddy current measurement or the leakage flux measurement.

7. Method according to Claim 5 or 6, **characterized in that** the determined position of the test piece (10) is used to correct the position of the measuring device (16) relative to the test piece (10) to a desired value.

8. Method according to one of Claims 5 to 7, **characterized in that** the determined cross section and/or the determined straightness of the test piece (10) is/are recorded as a function of the time.

9. Method according to one of Claims 5 to 8, **characterized in that** the sensor signals are used to determine whether there is a test piece (10), and the measuring device (16) is controlled accordingly.

## Revendications

1. Dispositif destiné à la détection non destructive et sans contact de défauts dans une éprouvette, avec
un système de mesure (16) stationnaire pour procéder à une mesure à courants de Foucault ou à une mesure du flux de fuite magnétique sur une éprouvette (10) avancée en continu par rapport au système de mesure ;
un système (12) de positionnement de l'éprouvette par rapport au système de mesure, dans un plan debout à la perpendiculaire de la direction de déplacement de l'éprouvette et
une unité de supervision (20) avec au moins trois capteurs de distance (22) placés en étant distribués dans la direction périphérique autour de l'éprouvette (10), pour détecter sans contact la distance entre la surface de l'éprouvette qui fait face au capteur concerné et le capteur concerné, ainsi qu'une unité (24) pour l'évaluation des signaux des capteurs,
l'unité d'évaluation (24) étant conçue pour déterminer à partir des signaux des capteurs la position de l'éprouvette (10) par rapport au système de mesure (16), dans un plan debout à la perpendiculaire de la direction de déplacement de l'éprouvette et
l'unité d'évaluation (24) étant conçue pour déterminer à partir des signaux des capteurs la section transversale de l'éprouvette (10), dans la mesure ou celle-ci est conçue en étant cylindrique et/ou le caractère rectiligne de l'éprouvette,
**caractérisé en ce que**
les capteurs de distance (22) fonctionnent de manière capacitive, inductive ou par ultrasons, **en ce qu'**une position des capteurs de distance (22) par rapport au système de mesure (16) est fixe et **en ce que** l'unité d'évaluation (20) est prévue sur une entrée du système de mesure (16), le système (12) étant placé côté entrée et côté sortie étant placé un système de guidage (14) pour faire avancer l'éprouvette (10) par rapport au système de mesure (16).

2. Dispositif selon la revendication 1, **caractérisé en ce que** l'unité d'évaluation (24) est conçue pour déterminer à partir des signaux des capteurs si une éprouvette (10) est présente, à des fins de commande du système de mesure (16).

3. Dispositif selon l'une quelconque des revendications précédentes, **caractérisé en ce que** les capteurs de distance (22) sont placés dans un plan.

4. Dispositif selon l'une quelconque des revendications précédentes, **caractérisé en ce qu'**il est prévu un système d'affichage (26) optique, pour afficher le diamètre déterminé et/ou la position déterminée de l'éprouvette.

5. Procédé destiné à la détection non destructive et sans contact de défauts dans une éprouvette (10), lors duquel
l'éprouvette est poussée en avant en continu par rapport à un système de mesure (16) et est positionnée par rapport au système de mesure dans un plan debout à la perpendiculaire par rapport à la direction de déplacement de l'éprouvette ;
au moyen du système de mesure, il est procédé à une mesure à courants de Foucault ou à une mesure du flux de fuite magnétique sur l'éprouvette avancée en continu par rapport au système de mesure ;
au moyen d'au moins trois capteurs de distance (22) d'une unité de supervision (20), placés en étant distribués en direction périphérique autour de l'éprouvette, la distance entre la surface de l'éprouvette qui fait face au capteur concerné et le capteur concerné est détectée sans contact et évaluée, une position des capteurs de distance (22) par rapport au système de mesure (16) étant fixe et l'unité de supervision (20) étant prévue sur une entrée du système de mesure (16),
à partir des signaux des capteurs, la position de l'éprouvette (10) par rapport au système de mesure (16) est déterminée dans un plan debout à la perpendiculaire par rapport à la direction de déplacement de l'éprouvette, et
à partir des signaux des capteurs, la section transversale de l'éprouvette (10), dans la mesure où elle est conçue en étant cylindrique et/ou le caractère rectiligne de l'éprouvette est/sont déterminé(e)(s).

6. Procédé selon la revendication 5, **caractérisé en ce que** la position déterminée de l'éprouvette (10) est prise en compte dans l'évaluation de la mesure à courants de Foucault ou de la mesure du flux de fuite.

7. Procédé selon la revendication 5 ou la revendication 6, **caractérisé en ce que** la position déterminée de l'éprouvette (10) est utilisée pour corriger à une valeur de consigne la position du système de mesure (16) par rapport à l'éprouvette (10).

8. Procédé selon l'une quelconque des revendications 5 à 7, **caractérisé en ce que** la section transversale déterminée et/ou le caractère rectiligne déterminé de l'éprouvette (10) est/sont enregistré(e)(s) en tant que fonction du temps.

9. Procédé selon l'une quelconque des revendications 5 à 8, **caractérisé en ce qu'**à partir des signaux des capteurs, il est déterminé si une éprouvette (10) est présente et le système de mesure (16) est commandé en conséquence.
